# EUROPEAN PATENT APPLICATION

(11) **EP 4 485 770 A1**
(43) Date of publication of application: **01.01.2025**
(21) Application number: 23759831.3
(22) Date of filing: 15.02.2023
(51) Int. Cl.: H02K 15/02

(54) **LAMINATED BODY MANUFACTURING DEVICE AND LAMINATED BODY MANUFACTURING METHOD**

(30) Priority: 24.02.2022 JP 2022027044
(71) Applicant: NHK Spring Co., Ltd., Kanagawa 236-0004 (JP)
(72) Inventor: HIRAMA, Michinobu, Yokohama-shi, Kanagawa 236-0004 (JP); IWATA, Kazuo, Yokohama-shi, Kanagawa 236-0004 (JP); TAKAHASHI, Shuji, Yokohama-shi, Kanagawa 236-0004 (JP)
(74) Representative: DREISS Patentanwälte PartG mbB
(86) International application number: PCT/JP2023/005306
(87) International publication number: WO 2023/162830

(57) **Abstract**

A laminated body manufacturing device, includes a supply mechanism configured to supply a plurality of plate-shaped core pieces including locking core pieces, which have locking pieces at a plurality of positions at outer peripheral surfaces thereof, and non-locking core pieces that do not have the locking pieces; a receiving member configured to receive a plurality of the core pieces supplied from the supply mechanism; and an isolation mechanism disposed between the supply mechanism and the receiving member in a conveying direction of the core pieces, and controlling supply of the core pieces to the receiving member, wherein the isolation mechanism has locking portions that can move between locking positions, at which the locking portions respectively lock the plurality of locking pieces of the locking core pieces supplied from the supply mechanism, and non-locking positions at which the locking portions do not lock the respective locking pieces, and has an operating device moving the locking portions to the locking positions and the non-locking positions.

## Description

### Technical Field

The present disclosure relates to a laminated body manufacturing device and a laminated body manufacturing method.

### Background Art

A laminated body, in which plural core pieces that are thin-plate-shaped and have been punch-molded are layered, is manufactured in order to obtain a motor core (a rotor core or a stator core) used in a motor installed in an electric vehicle or the like.

Japanese Patent Application Laid-Open (JP-A) No. 2019-118169 discloses using a plate layering device in order to manufacture a laminated body that structures a stator core. In this plate layering device, a sensor, which senses passage of a plate conveyed out from a cylinder serving as a conveying path, and an isolating mechanism that supports plates are provided in a vicinity of the exit of the cylinder. On the basis of the results of detection of the sensor, the isolating mechanism is protruded out onto the plate conveying path at an arbitrary time, and the conveying of the plate is stopped, thereby controlling the number of plates that are supplied to a jig and the timing of the supplying.

### SUMMARY OF INVENTION

### Technical Problem

In a plate layering device such as that disclosed in JP-A No. 2019-118169, in a case in which the speed of conveying the plates out from the cylinder is relatively fast, if the timing of causing the isolating mechanism to protrude out is determined on the basis of only the results of detection of the sensor that senses the passage of a plate conveyed out from the cylinder as in JP-A No. 2019-118169, the time period from the sensing of the passage of a plate to the completion of the operation of the isolating mechanism is extremely short. Accordingly, fast response speeds are required of the actuator of the isolating mechanism and the sensor, and the control devices thereof, and the difficulty of control also increases. Further, if the operation speed of the isolating mechanism decreases due to, for example, deterioration of the actuator of the isolating mechanism over time, the plate whose conveying is to be stopped will arrive before operation of the isolating mechanism 50 is completed, and the problem of being unable to stop the conveying of that plate may arise. Moreover, in order to accurately operate the isolating mechanism, the deterioration over time of the actuator of the isolating mechanism must be checked frequently, and the frequency of maintenance is high.

In view of the above-described topic, the present disclosure provide a laminated body manufacturing device and a laminated body manufacturing method that can accurately and efficiently carry out layering of core pieces without the need for special devices or the like.

### Solution to Problem

In order to achieve the above-described object, a laminated body manufacturing device relating to a first aspect of the present disclosure includes: a supplying mechanism that can supply a plurality of plate-shaped core pieces including locking core pieces, which have locking pieces at a plurality of places of outer peripheral surfaces thereof, and non-locking core pieces that do not have the locking pieces; a receiving member that can receive a plurality of the core pieces supplied from the supplying mechanism; and an isolating mechanism disposed between the supplying mechanism and the receiving member in a conveying direction of the core pieces, and controlling supply of the core pieces to the receiving member, wherein the isolating mechanism has locking portions that can move between locking positions, at which the locking portions respectively lock the plurality of locking pieces of the locking core piece supplied from the supplying mechanism, and non-locking positions at which the locking portions do not lock the locking pieces respectively, and an operating device moving the locking portions to the locking positions and the non-locking positions.

In the above-described laminated body manufacturing device, because the isolating mechanism locks the locking pieces of the locking core pieces, the time period over which the non-locking core pieces pass the position where the isolating mechanism is provided can be used as the time period for moving the locking portions of the isolating mechanism to the locking positions.

In a laminated body manufacturing device relating to a second aspect of the present disclosure, the above-described laminated body manufacturing device relating to the first aspect of the present disclosure further includes a squeezing portion disposed between the supplying mechanism and the isolating mechanism in the conveying direction and supporting, from sides, the core pieces supplied from the supplying mechanism, and the core pieces that are supported from the sides by the squeezing portion can be conveyed within the squeezing portion along the conveying direction.

In the above-described laminated body manufacturing device, because the core pieces supplied from the supplying mechanism are supplied to the receiving member via the squeezing portion, the supplied postures of the core pieces that are supplied to the receiving member are stable.

In a laminated body manufacturing device relating to a third aspect of the present disclosure, in the above-described laminated body manufacturing device relating to the first or second aspect of the present disclosure, a plurality of the core pieces are layered and structure a block core, and one block core structures a motor core, or a plurality of the block cores are layered and structure a motor core, and the block core is structured by one or a plurality of locking core pieces positioned at a downstream side in the conveying direction and one or a plurality of the non-locking core pieces positioned at an upstream side in the conveying direction.

In the above-described laminated body manufacturing device, due to only the core pieces, which are at the downstream side of the plural core pieces that structure the block core, being made to be the locking core pieces, the isolating by the isolating mechanism can be carried out in units of the block core.

In a laminated body manufacturing device relating to a fourth aspect of the present disclosure, in the above-described laminated body manufacturing device relating to the second aspect of the present disclosure, after the operating device moves the locking portions from the locking positions to the non-locking positions, the operating device returns the locking portions to the locking positions during a time period in which the non-locking core pieces pass a position on a conveying path of the core pieces that includes the locking positions.

In the above-described laminated body manufacturing device, during the time period in which the non-locking core pieces pass the position where the isolation mechanism is provided, the isolating mechanism can carry out the operation of returning the locking portions to the locking positions at which they lock the plural core pieces that structure the next block core. Therefore, the time period for carrying out this returning operation can be ensured to be long as compared with conventional structures.

In a laminated body manufacturing device relating to a fifth aspect of the present disclosure, in the above-described laminated body manufacturing device relating to any of the first through fourth aspects of the present disclosure, the locking pieces are structured by projections that project out from outer peripheral surfaces of the locking core pieces.

In the above-described laminated body manufacturing device, the core piece locking structure can be formed to be simple.

In a laminated body manufacturing device relating to a sixth aspect of the present disclosure, in the above-described laminated body manufacturing device relating to any of the first through fourth aspects of the present disclosure, the locking pieces are structured by portions of outer peripheral edges of the locking core pieces, and, at the non-locking core pieces, concave portions that open toward outer peripheral surfaces of the non-locking core pieces are provided at positions corresponding to the locking pieces in a state in which the non-locking core pieces are layered with the locking core pieces.

In the above-described laminated body manufacturing device, the core piece locking structure can be formed to be simple.

In a laminated body manufacturing device relating to a seventh aspect of the present disclosure, in the above-described laminated body manufacturing device relating to any of the first through sixth aspects of the present disclosure, the operating device operates the locking portions to move between the locking positions that are provided in a direction of relatively approaching the locking core pieces, and the non-locking positions that are provided in a direction of relatively moving away from the locking core pieces.

In the above-described laminated body manufacturing device, the locking function of the locking portions can be realized by using a known linear motion device as the operating device.

In a laminated body manufacturing device relating to an eighth aspect of the present disclosure, in the above-described laminated body manufacturing device relating to any of the first through sixth aspects of the present disclosure, the operating device operates the locking portions to move between the locking positions that are provided on moving paths of the locking pieces when the locking core pieces are conveyed, and the non-locking positions that are provided at positions adjacent, in directions running along outer peripheral surfaces of the locking core pieces, to the moving paths of the locking pieces.

In the above-described laminated body manufacturing device, because the locking portions move along the outer peripheral surfaces of the core pieces, it is easy to ensure regions over which the locking portions can move.

In a laminated body manufacturing device relating to a ninth aspect of the present disclosure, the above-described laminated body manufacturing device relating to any of the first through eighth aspects of the present disclosure further includes holding mechanisms holding the locking core pieces at which the locking pieces are locked by the locking portions.

In the above-described laminated body manufacturing device, the supporting of the core pieces by the isolating mechanism can be assisted by the holding mechanisms, and the locking portions and the engaging pieces can be made to be small.

In a laminated body manufacturing device relating to a tenth aspect of the present disclosure, the above-described laminated body manufacturing device relating to any of the second through ninth aspects of the present disclosure further includes a rotating mechanism rotating the receiving member around a rotation axis, which runs along the conveying direction.

In the above-described laminated body manufacturing device, rotated stacking (rotational buildup core) can be carried out in units of the block core for example.

In a laminated body manufacturing device relating to an eleventh aspect of the present disclosure, in the above-described laminated body manufacturing device relating to any of the first through tenth aspects of the present disclosure, a plurality of the core pieces are layered and structure a block core, and one block core structures a stator core, or a plurality of the block cores are layered and structure a stator core, and the core pieces have annular yokes, and teeth provided at inner peripheries of the yokes, and the locking pieces are positioned at radial direction outer sides of the teeth.

In the above-described laminated body manufacturing device, deterioration of the magnetic characteristics of the motor core due to the locking pieces can be suppressed.

A laminated body manufacturing device relating to a twelfth aspect of the present disclosure includes: a squeezing portion that can downwardly convey a plurality of plate-shaped core pieces including locking core pieces, which have locking pieces at a plurality of places of outer peripheral surfaces thereof, and non-locking core pieces that do not have the locking pieces; a supplying mechanism that is positioned at an upstream side, in a conveying direction of the core pieces, of the squeezing portion and that can selectively supply the locking core pieces and the non-locking core pieces to the squeezing portion; and a receiving member that can receive a plurality of the core pieces supplied from the conveying direction downstream side of the squeezing portion, wherein the squeezing portion supports, from sides, the locking pieces of the locking core pieces that pass through an interior of the squeezing portion.

In the above-described laminated body manufacturing device, the timing of supplying the core pieces to the receiving member, and the number of core pieces that are supplied, can be adjusted without the need to separately use the mechanisms that can temporarily hold the core pieces, which are the isolating mechanism and the holding mechanisms. Due thereto, time for carrying out exchanging of the receiving member or rotated stacking can be ensured.

In a laminated body manufacturing device relating to a thirteenth aspect of the present disclosure, in the above-described laminated body manufacturing device relating to the twelfth aspect of the present disclosure, the squeezing portion has a squeezing portion upstream portion positioned at the conveying direction upstream side of the squeezing portion and supporting, from the sides, a plurality of the locking core pieces and the non-locking core pieces that pass through the interior of the squeezing portion, and a squeezing portion downstream portion positioned at the conveying direction downstream side of the squeezing portion and supporting, from the sides, the locking pieces of the locking core pieces that pass through the interior of the squeezing portion.

In the above-described laminated body manufacturing device, because both the locking core pieces and the non-locking core pieces are held by the squeezing portion upstream portion, the conveying of the locking core pieces and the non-locking core pieces by the squeezing portion is stable.

A laminated body manufacturing method relating to a fourteenth aspect of the present disclosure includes: a step of supplying a plurality of plate-shaped core pieces from a supplying mechanism, the plurality of plate-shaped core pieces including locking core pieces, which have locking pieces at a plurality of places of outer peripheral surfaces thereof, and non-locking core pieces that do not have the locking pieces; a step of selectively supporting the core pieces supplied from the supplying mechanism by using an isolating mechanism, the isolating mechanism having locking portions that can move between locking positions, at which the locking portions respectively lock the plurality of locking pieces of the locking core pieces supplied from the supplying mechanism, and non-locking positions at which the locking portions do not lock the locking pieces respectively, and an operating device moving the locking portions to the locking positions and the non-locking positions, and the core pieces are supported due to the locking portions that are positioned at the locking positions locking the locking pieces of the locking core pieces; a step of moving the locking portions from the locking positions to the non-locking positions in order to supply a plurality of the core pieces, which are supported by the isolating mechanism, to the receiving member; and a step of returning the locking portions, which have been moved to the non-locking positions, to the locking positions during a time period in which the non-locking core pieces pass a position that includes the locking positions on a conveying path of the core pieces.

In the above-described laminated body manufacturing method, the locking portions of the isolating mechanism contact the locking pieces of the locking core pieces. Therefore, the time period over which the non-locking core pieces pass the position where the isolating mechanism is provided can be used as the time period for moving the locking portions to the locking positions. Thus, the time for moving the locking portions can be ensured to be long, as compared with conventionally. Due thereto, controlling of the supplying of the core pieces to the receiving member can be carried out accurately even if elements having a fast response speed are not used as the structural elements and the like of the isolating mechanism.

In a laminated body manufacturing method relating to a fifteenth aspect of the present disclosure, the above-described laminated body manufacturing method relating to the fourteenth aspect of the present disclosure further includes a step supporting the core pieces, which have been supplied from the supplying mechanism, from sides by using a squeezing portion, and the squeezing portion is disposed between the supplying mechanism and the isolating mechanism in a conveying direction of the core pieces and can convey the core pieces, which are supported by the squeezing portion from the sides, in an interior of the squeezing portion along the conveying direction.

In the above-described laminated body manufacturing method, by conveying the core pieces in states in which they are supported by the squeezing portion, the supplied postures of the core pieces that are supplied to the receiving member are stable.

In a laminated body manufacturing method relating to a sixteenth aspect of the present disclosure, the above-described laminated body manufacturing method relating to the fourteenth or fifteenth aspect of the present disclosure further includes a step of, by using holding mechanisms, holding the locking core pieces at which the locking pieces are locked by the locking portions.

In the above-described laminated body manufacturing method, the supporting of the core pieces by the isolating mechanism can be assisted by the holding mechanisms, and the supporting of the core pieces can be carried out stably.

In a laminated body manufacturing method relating to seventeenth aspect of the present disclosure, the above-described laminated body manufacturing method relating to the fourteenth or fifteenth aspect of the present disclosure further includes a step of moving the locking portions to holding positions at which the locking portions lock the locking pieces and at least portions of outer peripheral edges of the locking core pieces supplied from the supplying mechanism.

In the above-described laminated body manufacturing method, due to the locking portions of the isolating mechanism locking the outer peripheral edges of the locking core pieces in addition to the locking pieces, the surface area of contact between the locking portions and the locking core pieces can be made to be larger than in a case in which the locking portions lock only the locking pieces. Accordingly, the supporting of the core pieces can be carried out stably.

In a laminated body manufacturing method relating to an eighteenth aspect of the present disclosure, the above-described laminated body manufacturing method relating to any of the fifteenth through seventeenth aspects of the present disclosure further includes a step of rotating the receiving member by a predetermined angle around a rotation axis, which runs along the conveying direction.

In the above-described laminated body manufacturing method, rotated stacking can be carried out in units of the block core for example.

In a laminated body manufacturing method relating to a nineteenth aspect of the present disclosure, in the above-described laminated body manufacturing method relating to any of the fourteenth through eighteenth aspects of the present disclosure, a plurality of the core pieces are layered and structure a block core, and one block core structures a motor core, or a plurality of the block cores are layered and structure a motor core, and the block core is structured by one or a plurality of locking core pieces positioned at a downstream side in a conveying direction of the core pieces and one or a plurality of the non-locking core pieces positioned at an upstream side in the conveying direction.

In the above-described laminated body manufacturing method, due to only the core pieces, which are at the downstream side of the plural core pieces that structure the block core, being made to be the locking core pieces, the time for rotated stacking or for exchanging the receiving member each time that the predetermined number of core plates that structure a block core are supplied can be ensured.

In a laminated body manufacturing method relating to a twentieth aspect of the present disclosure, in the above-described laminated body manufacturing method relating to any of the fourteenth through nineteenth aspects of the present disclosure, the locking pieces are structured by projections that project out from outer peripheral surfaces of the locking core pieces, and the method further comprises a step of welding by using the locking pieces as projections for welding.

In the above-described laminated body manufacturing method, because the locking pieces can be repurposed as projections for welding, there is no need to provide the locking pieces and the projections for welding separately.

A laminated body manufacturing method relating to a twenty-first aspect of the present disclosure includes: a step of supplying a plurality of plate-shaped core pieces to a squeezing portion, the plurality of core pieces including locking core pieces, which have locking pieces at a plurality of places of outer peripheral surfaces thereof, and non-locking core pieces that do not have the locking pieces, and the squeezing portion supports, from sides, the locking pieces of the locking core pieces that pass through an interior of the squeezing portion; and a step of receiving, by a receiving member, the locking core piece that passes through the squeezing portion, or the locking core piece that passes through the squeezing portion and one or a plurality of non-locking core pieces supported by a top surface of the locking core piece.

In the above-described laminated body manufacturing method, the timing of supplying the core pieces to the receiving member, and the number of core pieces that are supplied, can be adjusted without the need to separately use the mechanisms that hold the core pieces, which are the isolating mechanism and the holding mechanisms. Due thereto, time for carrying out exchanging of the receiving member or rotated stacking can be ensured. Advantageous Effects of Invention

In accordance with the laminated body manufacturing device and laminated body manufacturing method of the present disclosure, the layering of core pieces can be carried out accurately and efficiently without the need for special devices or the like.

### BRIEF DESCRIPTION OF DRAWINGS

Fig. 1 is a drawing illustrating an example of a locking core piece that is supplied to a laminated body manufacturing device relating to a first embodiment of the present disclosure.
Fig. 2 is a drawing illustrating an example of a non-locking core piece that is supplied to the laminated body manufacturing device relating to the first embodiment of the present disclosure.
Fig. 3 is a schematic explanatory drawing illustrating an example of the laminated body manufacturing device relating to the first embodiment of the present disclosure.
Fig. 4 is a schematic sectional view cut at line D-D of Fig. 3.
Fig. 5 is a schematic sectional view cut at line E-E of Fig. 3.
Fig. 6A is an expanded view of main portions illustrating an example of an engaging structure of a locking portion and a locking piece.
Fig. 6B is an expanded view of main portions illustrating an example of an engaging structure of the locking portion and the locking piece.
Fig. 6C is an expanded view of main portions illustrating an example of an engaging structure of the locking portion and the locking piece.
Fig. 6D is an expanded view of main portions illustrating an example of an engaging structure of the locking portion and the locking piece.
Fig. 7 is a flowchart illustrating an example of a laminated body manufacturing method relating to the first embodiment of the present disclosure.
Fig. 8A is a drawing for explaining operation, which illustrates main portions of the manufacturing device at the time of executing the laminated body manufacturing method illustrated in Fig. 7.
Fig. 8B is a drawing for explaining operation, which illustrates main portions of the manufacturing device at the time of executing the laminated body manufacturing method illustrated in Fig. 7.
Fig. 8C is a drawing for explaining operation, which illustrates main portions of the manufacturing device at the time of executing the laminated body manufacturing method illustrated in Fig. 7.
Fig. 9 is a schematic explanatory drawing illustrating an example of a laminated body manufacturing device relating to a second embodiment of the present disclosure.
Fig. 10 is a schematic sectional view cut at line F-F of Fig. 9.
Fig. 11 is a flowchart illustrating an example of a laminated body manufacturing method relating to the second embodiment of the present disclosure.
Fig. 12A is a drawing for explaining operation, which illustrates main portions of the manufacturing device at the time of executing the laminated body manufacturing method illustrated in Fig. 11.
Fig. 12B is a drawing for explaining operation, which illustrates main portions of the manufacturing device at the time of executing the laminated body manufacturing method illustrated in Fig. 11.
Fig. 12C is a drawing for explaining operation, which illustrates main portions of the manufacturing device at the time of executing the laminated body manufacturing method illustrated in Fig. 11.

### DESCRIPTION OF EMBODIMENTS

This application is based on Japanese Patent Application No. 2022-027044 filed in Japan on February 24, 2022, the contents of which form a part of the contents of the present application.

The present disclosure will become more fully understood from the detailed description given hereinbelow. Further range of application of the present disclosure will become clearer from the detailed description given hereinbelow. However, the detailed description and the specific embodiment are illustrated of desired embodiments of the present disclosure and are described only for the purpose of explanation. Various changes and modifications will be apparent to those ordinary skilled in the art on the basis of the detailed description.

The applicant has no intention to give to public any disclosed embodiment. Among the disclosed changes and modifications, those which may not literally fall within the scope of the patent claims constitute, therefore, a part of the present invention in the sense of doctrine of equivalents.

Respective embodiments for implementing the present disclosure are described hereinafter with reference to the drawings. Note that the scope that is necessary to a description for achieving the object of the present disclosure is schematically described hereinafter, and the scope needed for explaining those portions of the present disclosure is mainly described, and portions for which description is omitted are structures in accordance with known art. Further, same or corresponding members in the drawings are denoted by the same or similar reference numerals, and repeat description is omitted.

### <First Embodiment>

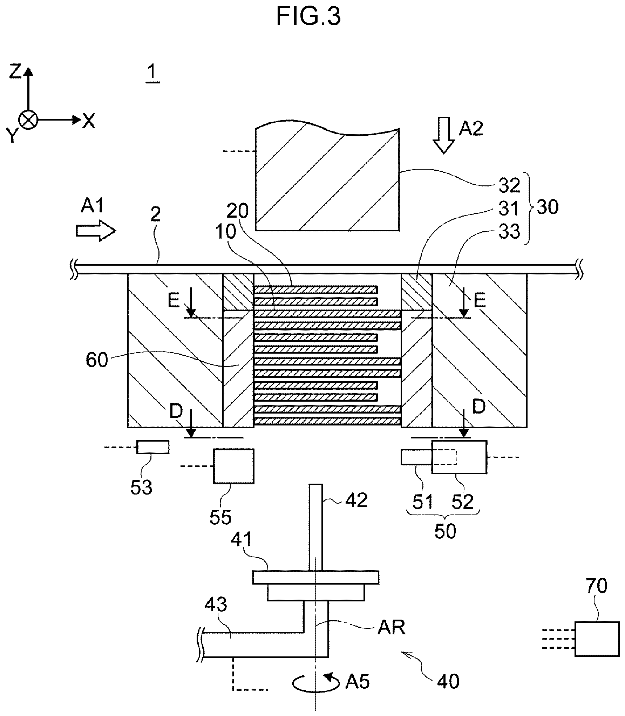

Before describing a laminated body manufacturing device 1 (see Fig. 3) and a laminated body manufacturing method relating to a first embodiment, core pieces that structure the laminated body will be described briefly. A plurality of the core pieces that are layered in the present embodiment may be layered and structure a block core, and this block core can alone structure, or a plurality of block cores can be layered and structure, a motor core, e.g., the stator core of an inner-rotor-type rotating electric machine. Further, the core pieces include locking core pieces 10 having locking pieces 13 at plural regions of the outer peripheral surfaces thereof, and non-locking core pieces 20 that do not have the aforementioned locking pieces 13. Note that "laminated body" in the present disclosure means a structure in which a plurality of the core pieces are merely layered, and a structure in which these laminated bodies are joined by welding or adhesion or the like is called a "motor core", so as to distinguish between the both. Further, the above-described motor core may be either of a split-type stator core or a non-split-type stator core, or may structure a rotor core rather than a stator core.

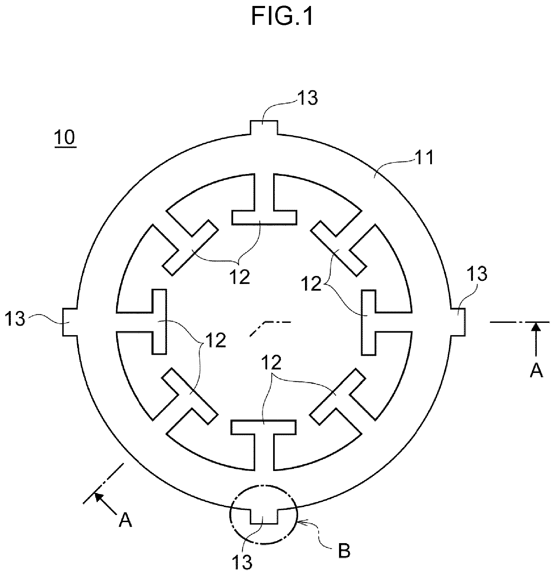

Fig. 1 is a drawing illustrating an example of the locking core piece that is supplied to the laminated body manufacturing device relating to the first embodiment of the present disclosure. As illustrated in Fig. 1, the locking core piece 10 can include a yoke 11 that is annular and in whose central portion is formed a through-hole in which a rotor core can be placed, teeth 12 that are substantially T-shaped in plan view and are provided at the inner periphery of the yoke 11 so as to project-out toward the central portion of the yoke 11, and the locking pieces 13 that are structured by projections that project-out from the outer peripheral surface of the yoke 11 toward the outer side. Further, the locking core piece 10 can be structured by a plate-shaped electromagnetic steel plate of a predetermined thickness.

A plurality, e.g., eight, of the teeth 12, which are provided at the inner peripheral surface of the locking core piece 10, may be provided at a substantially uniform interval along this inner peripheral surface. An armature coil may be wound on the peripheries of the teeth 12 at the time of assembly to a stator core. Further, a plurality, e.g., four, of the locking pieces 13, which are provided at the outer peripheral surface of the locking core piece 10, may be provided at a substantially uniform interval along the outer periphery of the locking core piece 10. In addition, as illustrated in Fig. 1, it is preferable that the positions at which the four locking pieces 13 are provided are positioned at the radial direction outer sides of any of the eight teeth 12 provided at the inner peripheral surface of the locking core piece 10. Usually, at the radial direction outer side of the teeth 12, the density of the magnetic flux generated at the time when the locking core piece 10 is operated as a portion of a motor core is low, as compared with at other positions. Accordingly, if the locking pieces 13 are disposed at the radial direction outer sides of the teeth 12 as described above, a deterioration in the magnetic characteristics of the motor core due to the provision of the locking pieces 13 can be suppressed.

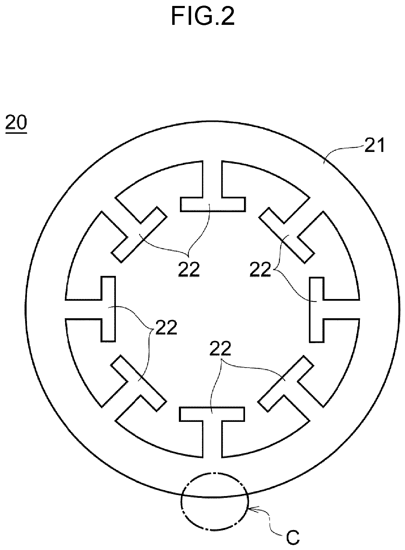

Fig. 2 is a drawing illustrating an example of the non-locking core piece that is supplied to the laminated body manufacturing device relating to the first embodiment of the present disclosure. As illustrated in Fig. 2, the non-locking core piece 20 can include a yoke 21 that is annular and in whose central portion is formed a through-hole in which a rotor core can be placed, and teeth 22 that are substantially T-shaped in plan view and are provided at the inner peripheral surface of the yoke 21 so as to project-out toward the central portion of the yoke 21. The non-locking core piece 20 also can be structured by a plate-shaped electromagnetic steel plate of a predetermined thickness. In other words, the non-locking core piece 20 can be said to include structures that are similar to the locking core piece 10, except for the point that the non-locking core piece 20 does not have the locking pieces 13 that are included at the above-described locking core piece 10. Accordingly, the yoke 11 and the teeth 12 of the locking core piece 10, and the yoke 21 and the teeth 22 of the non-locking core piece 20, may have similar dimensions and be of a similar number.

### (Laminated Body Manufacturing Device)

Fig. 3 is a schematic explanatory drawing illustrating an example of the laminated body manufacturing device relating to the first embodiment of the present disclosure. In this Fig. 3, the locking core pieces 10 and the non-locking core pieces 20 are illustrated in cross-sectional views cut at a position corresponding to line A-A shown in Fig. 1. Further, in Fig. 3, in order to make it easy to understand the state of the locking pieces 13, only the dimensions of the locking pieces 13 are drawn larger than the actual dimensions, and illustration of the respective through-holes formed in the centers of the respective core pieces is omitted. As illustrated in Fig. 3, the laminated body manufacturing device 1 relating to the present embodiment includes at least a supplying mechanism 30 that can supply the above-described locking core pieces 10 and non-locking core pieces 20, a receiving jig 40 serving as an example of a receiving member that can receive plural core pieces supplied from the supplying mechanism 30, and an isolating mechanism 50 disposed between the supplying mechanism 30 and the receiving jig 40 in the conveying direction of the core pieces and controlling the supply of core pieces to the receiving jig 40. Note that, hereinafter, the direction indicated by arrow X shown in Fig. 3 is the left-right direction, and similarly hereinafter, explanation is carried out by using the direction indicated by arrow Y as the front-rear direction and the direction indicated by arrow Z as the vertical direction.

The supplying mechanism 30 may be a press machine that selectively punch-molds the locking core pieces 10 and the non-locking core pieces 20 from a strip-shaped steel plate 2 conveyed in the arrow A1 direction in Fig. 3. This supplying mechanism 30 can include a die (lower die) 31 that supports a portion of the strip-shaped steel plate 2 together with a supporting stand 33 that supports the strip-shaped steel plate 2 that is conveyed, and a punch (upper die) 32 disposed above the die 31. Due to the punch 32 operating in the arrow A2 direction in Fig. 3, the locking core piece 10 or the non-locking core piece 20 can be punch-molded from the strip-shaped steel plate 2. Further, the locking core piece 10 or the non-locking core piece 20 that has been punched by the punch 32 is pushed toward the lower side of the die 31 and conveyed in a downward direction. What is called the downward direction here corresponds to the conveying direction of the respective core pieces in the present embodiment.

The receiving jig 40 may be positioned beneath the supplying mechanism 30 and receives the locking core pieces 10 and the non-locking core pieces 20 that are supplied from the supplying mechanism 30. The receiving jig 40 can include a pedestal 41 on which are placed the locking core pieces 10 and the non-locking core pieces 20 supplied from the supplying mechanism 30, plural support poles 42 extending upward from the top surface of the pedestal 41 and supporting the locking core pieces 10 and the non-locking core pieces 20 from the sides, and a conveying arm 43 that moves the pedestal 41 in an arbitrary direction. Thereamong, the conveying arm 43 may be a structure that can support the lower side of the pedestal 41 and can move the pedestal 41 in a predetermined direction, e.g., at least one direction among the front-rear direction, the left-right direction and the vertical direction. In addition, the conveying arm 43 may function as a rotating mechanism. Namely, the conveying arm 43 may be a structure that can rotate the supported pedestal 41 in the direction indicated by arrow A5 in Fig. 3 for example, around rotation axis AR that extends in the vertical direction. Note that the receiving jig 40 is not limited to the above-described structure provided that it can receive the respective core pieces, and the conveying structure and the like thereof in particular can be changed appropriately.

Further, in the present embodiment, the above-described receiving jig 40 is exemplified as the receiving member, but the receiving member may be a structure other than the above-described receiving jig 40 provided that it can receive the locking core pieces 10 and the non-locking core pieces 20 supplied from the supplying mechanism 30. Specifically, it is possible to employ, as the receiving member, a conveyor, a slope, or a conveying device that applies pressure (also called back pressure) in the direction opposite the conveying direction to the locking core pieces 10 and the non-locking core pieces 20 that are conveyed within a squeezing portion 60 that is described later. Further, these conveying devices and the above-described receiving jig 40 can also be used by being combined appropriately.

The isolating mechanism 50 may control the supplying of the locking core pieces 10 and the non-locking core pieces 20, which are conveyed in the downward direction, to the receiving jig 40. The isolating mechanism 50 includes at least locking portions 51 that contact the locking core pieces 10 that are conveyed and limit movement thereof, and an actuator (an example of the operating device) 52 that operates the locking portions 51.

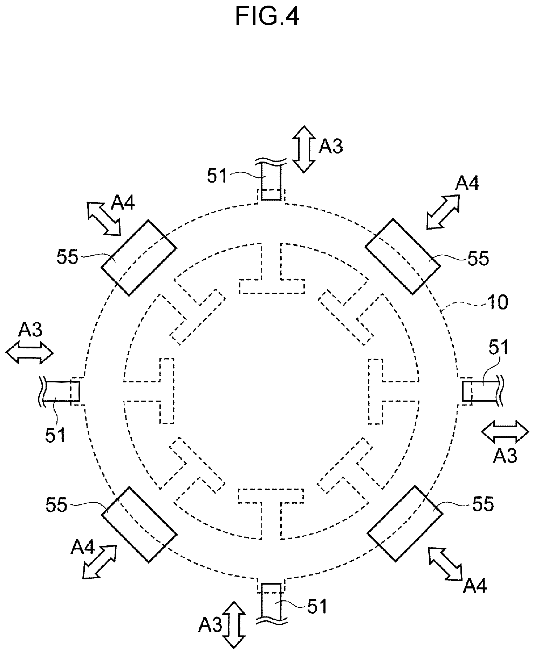

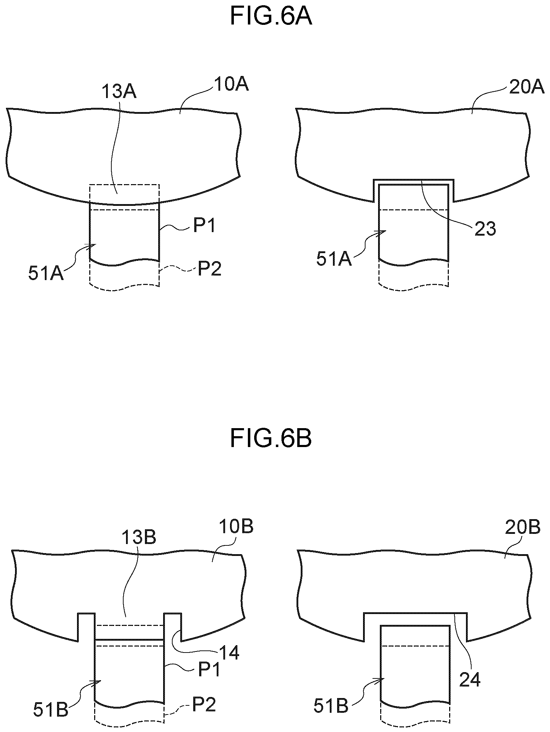

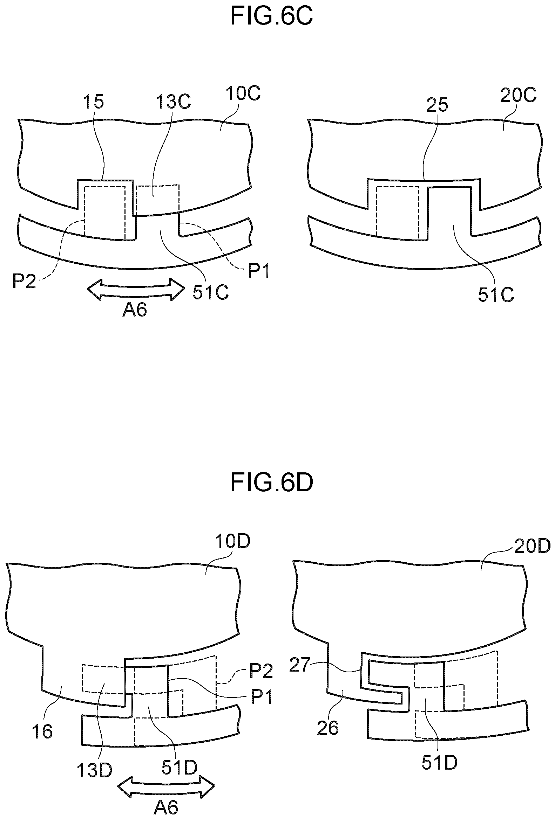

Fig. 4 is a schematic sectional view cut at line D-D of Fig. 3. As illustrated in Fig. 3 and Fig. 4, a plurality of the locking pieces 13, and specifically, four so as to match the number of the locking pieces 13 provided at the locking core piece 10, may be provided at the periphery of each core piece that is conveyed. The locking portions 51 can be structured so as to be able to move between locking positions P1 (see Fig. 6) at which the locking portions 51 respectively lock the plural locking pieces 13 of the locking core piece 10 supplied from the supplying mechanism 30, and non-locking positions P2 (see Fig. 6) at which the locking portions 51 do not lock the respective locking pieces 13. In other words, the locking positions P1 can be set to be arbitrary positions on the paths of movement that the locking pieces 13 of the locking core piece 10 that is conveyed on the conveying path travel on, and the non-locking positions P2 can be set to positions that do not overlap these paths of movement of the locking pieces 13. Note that a state in which the locking portions 51 in Fig. 4 are at the locking positions P1 is illustrated. Further, in Fig. 4, the members that are positioned lower than the isolating mechanism 50, e.g., the receiving jig 40 and the like, are not illustrated.

The actuator 52 operates the locking portions 51. Specifically, the actuator 52 may operate the locking portions 51 in the directions indicated by arrows A3 in Fig. 4 for example, such that the locking portions 51 move between the above-described locking positions P1 and non-locking positions P2. A known linear motion device such as an air cylinder or a single axis robot can be employed as the actuator 52 of the present embodiment. Due to this actuator 52, for example, as illustrated in Fig. 6A and Fig. 6B that are described hereinafter, the locking portions 51 can be operated so as to move between the locking positions P1 that are provided in directions of relatively approaching the locking core piece 10, and the non-locking positions P2 that are provided in directions of relatively moving away from the locking core piece 10. Or, as illustrated in Fig. 6C and Fig. 6D that are described hereinafter, due to the same actuator 52, the locking portions 51 can be operated so as to move between the locking positions P1 that are positioned on the moving paths of the locking pieces 13 at the time when the locking core piece 10 is conveyed, and the non-locking positions P2 that are provided at positions adjacent, in the direction running along the outer peripheral surface of the locking core piece 10, the paths of movement of the locking pieces 13.

Further, the isolating mechanism 50 relating to the present embodiment can further include a sensor 53 that can sense the respective core pieces passing by an arbitrary position on the conveying path thereof. This arbitrary position is preferably an arbitrary position between the lower end portion of the squeezing portion 60 and the upper end portions of the locking portions 51, and is more preferably a position adjacent to the upper end of the locking portion 51. A known sensing device, e.g., an infrared sensor or a two-dimensional camera, can be employed as the sensor 53.

By the way, because the locking core piece 10 and the non-locking core piece 20 are structured by metal plates that are relatively thin, the strength of the locking pieces 13 alone is relatively low. Further, at the time when the isolating mechanism 50 supports the locking core piece 10, the weight of the locking core piece(s) 10, or of the locking core piece(s) 10 and the non-locking core piece(s) 20 layered thereon, is applied to the locking pieces 13. Therefore, there is the possibility that the locking pieces 13 that are supported by the isolating mechanism 50 will deform due to the aforementioned weight, and the supplying of the respective core pieces to the receiving jig 40 will be unable to be controlled. In consideration of this point, it is preferable for the manufacturing device 1 relating to the present embodiment to further include holding mechanisms 55 for assisting the supporting of the locking core piece 10 by the locking pieces 13.

As illustrated in Fig. 3 and Fig. 4, the holding mechanisms 55 may be provided at a heightwise position similar to the isolating mechanism 50. Further, the holding mechanisms 55 may be made able to operate so as to move between locking positions P3 (not illustrated) at which the holding mechanisms 55 can support at least some of the portions, where the locking pieces 13 are not provided, of the outer peripheral edge of the locking core piece 10, and non-locking positions P4 (not illustrated) at which the holding mechanisms 55 do not support such portions of the outer peripheral edge. In order to stably support the respective core pieces, it is good to set the length, in the direction running along the outer peripheral surface of the locking core piece 10, of the holding mechanisms 55 (hereinafter this is also called the "width") to be larger than the width of the locking portions 51. The operating directions of the holding mechanisms 55 may be the directions indicated by arrows A4 in Fig. 4, i.e., directions of approaching or moving away from the locking core piece 10. By including such holding mechanisms 55, the locking core piece 10 that is supplied to the receiving jig 40, or the locking core piece 10 and the non-locking core piece(s) 20 layered thereon, can be supported by two mechanisms that are the isolating mechanism 50 and the holding mechanisms 55. Therefore, control of the supplying of the respective core pieces to the receiving jig 40 can be executed reliably.

In addition to the above-described structure, the manufacturing device 1 relating to the present embodiment can further include the squeezing portion 60 that conveys the locking core pieces 10 and the non-locking core pieces 20, between the supplying mechanism 30 and the isolating mechanism 50 in the conveying direction of the locking core pieces 10 and the non-locking core pieces 20. Note that this squeezing portion 60 is not an essential structure in the present disclosure.

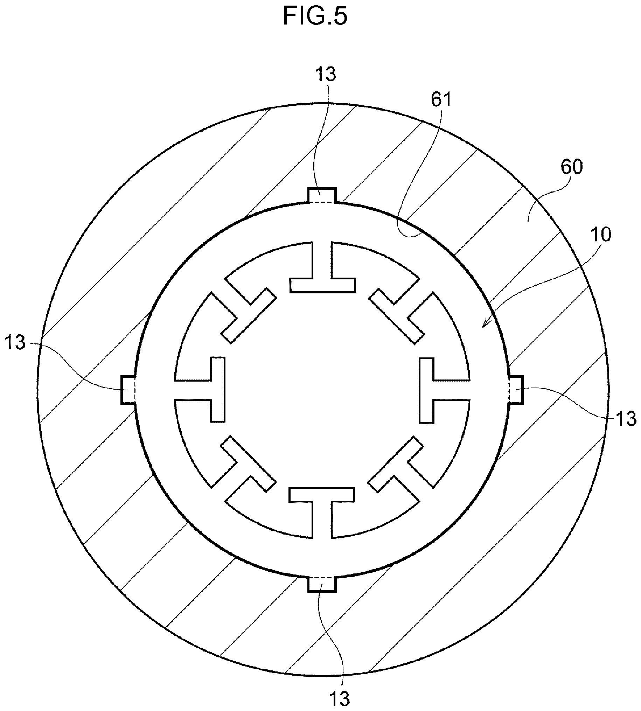

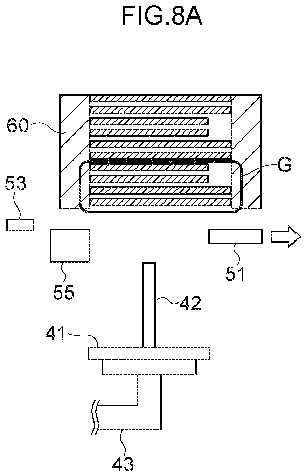

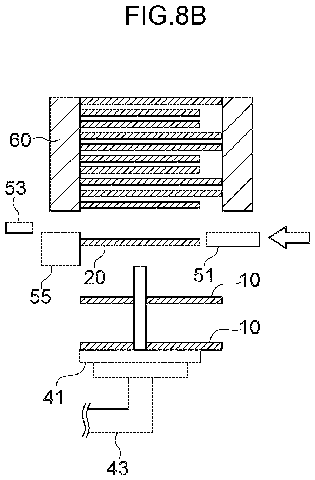

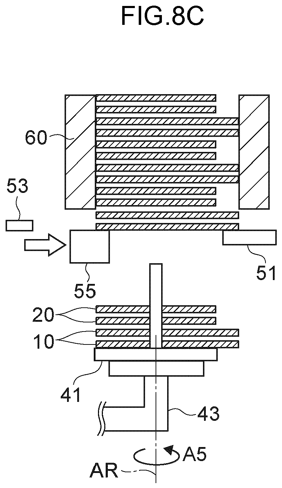

Fig. 5 is a schematic sectional view cut at line E-E of Fig. 3. As illustrated in Fig. 3 and Fig. 5, the squeezing portion 60 can be structured by a substantially cylindrical tube-shaped member that conveys the locking core pieces 10 and the non-locking core pieces 20, which have been punch molded and pushed-out toward the lower side of the die 31, to the receiving jig 40. Accordingly, it is good for the upper end portion of the squeezing portion 60 to be disposed so as to be connected to the lower end portion of the die 31, and, together with the die 31, be mounted to the supporting stand 33. As illustrated in Fig. 5, inner peripheral surface 61 of the squeezing portion 60 may be adjusted to a size that matches the shapes of the locking core pieces 10 and the non-locking core pieces 20 that are conveyed. Due thereto, the sides (i.e., the outer peripheries) of the locking core pieces 10 and the non-locking core pieces 20 that pass through the interior of the squeezing portion 60 may abut and be supported by the inner peripheral surface 61 of the squeezing portion 60. Note that the inner peripheral surface 61 of the squeezing portion 60 relating to the present embodiment is exemplified as a structure of a shape that matches the outer peripheral shape of the locking core piece 10, but it suffices for the inner peripheral surface 61 to be a structure that can support the locking core pieces 10 and the non-locking core pieces 20, and it suffices for the inner peripheral surface 61 to abut a portion of the outer peripheral surface of each core piece. Further, in Fig. 3 and in Fig. 8 and the like that are described hereinafter, the number of core pieces conveyed in the interior of the squeezing portion 60 is exemplified as being relatively small in order to facilitate understanding, but the number of core pieces conveyed in the interior of the squeezing portion 60 may be a unit from several tens to several hundreds. Further, the total number of core pieces that structure the laminated body also may be a unit from several tens to several hundreds.

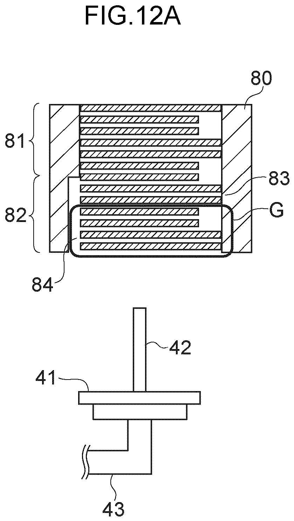

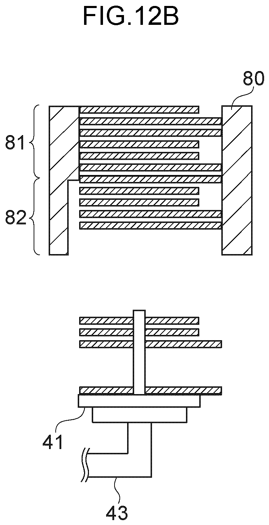

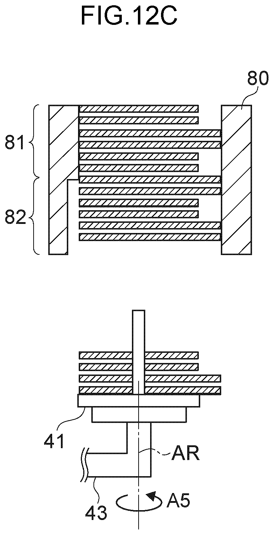

The locking core pieces 10 and the non-locking core pieces 20 that are supplied continuously from the supplying mechanism 30 may be successively conveyed into and supported by the upper end of the squeezing portion 60. Accordingly, each time that the locking core piece 10 or the non-locking core piece 20 is newly conveyed into the squeezing portion 60, the locking core pieces 10 and the non-locking core pieces 20 that are already being held within the squeezing portion 60 are pushed by this conveyed locking core piece 10 or non-locking core piece 20, and are conveyed downward within the squeezing portion 60 by an amount corresponding to the thickness of the conveyed locking core piece 10 or non-locking core piece 20. Note that in Fig. 3 and in Fig. 8, Fig. 9 and Fig. 12 that are described later, slight gaps are illustrated between the respective core pieces in order to make it easy to understand the borders of the respective core pieces, but the locking core pieces 10 and the non-locking core pieces 20 that are adjacent within the squeezing portion 60 of the present embodiment are conveyed in a layered state, or in other words, a state in which they are contacting one another. The same holds for the respective core pieces that have been conveyed onto the receiving jig 40 illustrated in Fig. 8 and Fig. 12.

The manufacturing device 1 relating to the present embodiment can further include a control device 70 in order to control the above-described respective structural elements. As illustrated by the dashed lines in Fig. 3 for example, the control device 70 may be connected so as to be able to communicate with the respective structural elements by wired or wireless communication. A computer that includes a sequencer (Programmable Logic Controller, PLC) can be employed as the control device 70.

Due to the laminated body manufacturing device 1 relating to the present embodiment having the above-described structure, and in particular, the structure in which the locking portions 51 of the isolating mechanism 50 that controls the conveying of the core pieces to the receiving jig 40 lock the locking pieces 13 of the locking core piece 10, the locking portions 51 do not contact the non-locking core piece 20. Accordingly, the time period over which the non-locking core pieces 20 pass the position on the conveying path where the isolating mechanism 50 is provided can be used as the time period for moving the locking portions 51 to the locking positions P1. Due thereto, the above-described laminated body manufacturing device 1 can ensure that the time for moving the locking portions 51 to the locking positions P1 is long, as compared with conventionally, and layering of the core pieces can be carried out accurately even if structures having fast response speeds are not employed for the actuator 52 and the sensor 53 that are included in the isolating mechanism 50. Further, the laminated body manufacturing device 1 can be manufactured relatively inexpensively, and the frequency of maintenance also can be kept low.

By the way, in the above-described manufacturing device 1, there is exemplified a structure in which the locking pieces 13 are structured by projections that project-out from the outer peripheral surface of the locking core piece 10, and the locking portions 51 are operated in directions of approaching or moving away from the central portion of the locking core piece 10, but the present disclosure is not limited to this. Thus, several modified examples of the engaging structure of the locking piece 13 and the locking portion 51, which are included in the present disclosure, are described hereinafter.

Fig. 6 is an enlarged view of main portions that illustrates several examples of the engaging structure of the locking portion and the locking piece. Note that, in Fig. 6A through Fig. 6D, the drawing at the left side is a drawing illustrating portions of locking portions 51A - 51D that are at the locking positions P1 and locking core pieces 10A - 10D, and specifically, illustrates the relationship with portion B that is surrounded by the dashed line in Fig. 1. Similarly, the drawing at the right side is a drawing illustrating portions of the locking portions 51A - 51D that are at the locking positions P1 and non-locking core pieces 20A - 20D, and specifically, illustrates the relationship with portion C that is surrounded by the dashed line in Fig. 2.

In the modified example illustrated in Fig. 6A, a structure in which a portion of the outer peripheral edge of the locking core piece 10A functions as locking piece 13A can be employed as the locking core piece 10A, and a structure in which a first concave portion 23, through which the locking portion 51A that is at the locking position P1 can pass, is formed at the outer peripheral surface of the non-locking core piece 20A can be employed as the non-locking core piece 20A. In this case, control of the supplying of the locking core piece 10A can be controlled by the locking portion 51A being operated in a direction of approaching or moving away from the central portion of the locking core piece 10A. Note that the non-locking position P2 of the locking portion 51A is shown by the dashed line in Fig. 6A, and the same holds for Fig. 6B through Fig. 6D as well.

Further, the modified example illustrated in Fig. 6B is an example in which the above-described locking structure is provided at the outer peripheral surfaces of the locking core piece 10B and the non-locking core piece 20B that have one or plural cut-outs 14, 24 that are formed as welding portions for welding plural core pieces that structure the laminated body and forming a motor core for example. Specifically, at the locking core piece 10B relating to the present modified example, a structure can be employed in which a locking piece 13B, which has the same shape as the locking piece 13 of the above-described locking core piece 10, is provided at the bottom surface portion of the one or plural cut-outs 14 provided in the outer peripheral surface of the locking core piece 10B. Further, as the non-locking core piece 20B, a structure can be employed in which the bottom surface portion of the one or plural cut-outs 24 provided in the outer peripheral surface of the non-locking core piece 20B is formed to be, for example, planar or arcuate, so as to not contact the locking portion 51B that is at the locking position P1. In this case as well, in the same way as the example illustrated in above-described Fig. 6A, control of the supplying of the locking core piece 10B can be controlled by operating the locking portion S 1B in a direction of approaching or moving away from the central portion of the locking core piece 10B. Note that the outer peripheral surface of the locking core piece in the present disclosure includes all of the side surfaces that are positioned at the outer side of the locking core piece. Specifically, the outer peripheral surface of the locking core piece includes not only the circumference-shaped side surface at the outer side of the locking core piece, but also wall surfaces that are not circumference-shaped such as the above-described bottom portions of the cut-outs 24.

As described above, when the locking piece 13B is provided at the interior of the cut-out 14, the locking piece 13B can be used as a projection for welding at the time when the laminated body is welded. Further, at the non-locking core piece 20B, if a projection, which is of a size such that it does not contact the locking portion S 1B that is at the locking position P1, is provided at the bottom surface portion of the cut-out 14, projections for welding can be provided at both the locking core piece 10B and the non-locking core piece 20B.

Moreover, in the modified example illustrated in Fig. 6C, as locking core piece 10C, a structure can be employed in which a locking core piece side second concave portion 15, through which the locking portion 51C that is at the non-locking position P2 can pass, is formed in the outer peripheral surface of the locking core piece 10C, and a portion of the outer peripheral edge of the locking core piece 10C, which is adjacent to the second concave portion 15, functions as a locking piece 13C. Further, at the non-locking core piece 20C, a structure can be employed in which a non-locking core piece side second concave portion 25, through which both the locking portion 51C that is at the locking position P1 and the locking portion 51C that is at the non-locking position P2 can pass, is formed in the outer peripheral surface of the non-locking core piece 20C.

In order to control the supplying of the locking core piece 10C and the non-locking core piece 20 having the above-described structures, the locking portion 51C relating to the present modified example may be operated by an unillustrated actuator so as to move between the locking position P1, at which the locking portion 51C locks the locking piece 13C of the locking core piece 10C conveyed on the conveying path, and the non-locking position P2 at which the locking portion 51C is positioned on the path of the locking core piece side second concave portion 15 and the non-locking core piece side second concave portion 25 of the locking core piece 10C and the non-locking core piece 20C that are conveyed on the conveying path. Accordingly, as illustrated by arrow A6 in Fig. 6C, the locking portion 51C of the present modified example moves in a direction running along the outer peripheral surfaces of the respective core pieces. Note that the locking portion 51D of the modified example illustrated in Fig. 6D that is described hereinafter moves in a similar direction.

Still further, the modified example illustrated in Fig. 6D is an example in which the above-described engaging structure is provided at the outer peripheral surfaces of the locking core piece 10D and the non-locking core piece 20D that respectively have one or plural ear portions 16, 26 that are used, for example, at the time of fixing to the housing of a rotating electric machine after assembly as a stator core. Specifically, at the locking core piece 10D relating to the present modified example, there can be employed a structure in which some of the one or plural ear portions 16 provided at the outer peripheral surface of the locking core piece 10D function as a locking piece 13D. Further, as the non-locking core piece 20D, there can be employed a structure in which a third concave portion 27, through which the locking portion 51D that is at the locking position P1 can pass, is formed in an appropriate place of the one or plural ear portions 26 that are provided at the outer peripheral surface of the non-locking core piece 20D. In relation to the above-described structure, the portion of the locking portion 51D of the present embodiment, which portion contacts the locking piece 13D, may be a shape that projects out in the direction running along the outer peripheral surfaces of the respective core pieces.

The engaging structure of the locking portion and the locking piece of the present disclosure is not limited to the above-described, several examples. For example, the position where the locking piece is provided can be set arbitrarily provided that it is at the outer peripheral surface of the core piece. For example, in a case in which the locking core piece and the non-locking core piece have projections that project out toward the radial direction outer side at the outer peripheral surfaces thereof, the locking piece may be a portion of the projection, and a concave portion may be formed in a corresponding position of the non-locking core piece. Or, in a case in which the locking core piece and the non-locking core piece have cut-outs that are recessed toward the radial direction inner side in the outer peripheral surfaces thereof, the locking piece may be a portion of the bottom surface portion of the cut-out, and a concave portion that is recessed even further toward the radial direction inner side may be formed in a corresponding position of the non-locking core piece.

Further, the example illustrated in above-described Fig. 6B for example exemplifies a structure in which the locking piece 13B also serves as a projection for welding, but the projection for welding and the locking piece can also be provided separately. In this case, for example, the bottom surface portion or a side surface portion of the cut-out 14 at which the projection for welding is formed can be used as the locking piece. Further, the engaging structure may be realized by combining the shapes of two or more of the engaging structures of the locking piece and the locking portion that are exemplified above. Moreover, the distal end portions of the above-described locking portions 51, 51A - 51D are exemplified as all being rectangular in plan view, but the shape of the distal end of the locking portion can be changed appropriately so as to match the shape and the like of the locking piece.

### (Laminated Body Manufacturing Method)

A laminated body manufacturing method relating to the present embodiment is described next. The following description exemplifies a case in which a laminated body is manufactured by using the above-described laminated body manufacturing device 1, but the laminated body manufacturing method of the present disclosure can be implemented even by a device other than the manufacturing device 1. Note that explanation of the effects and the like that is given hereinafter also serves as explanation of the effects of the manufacturing device 1 relating to the present embodiment.

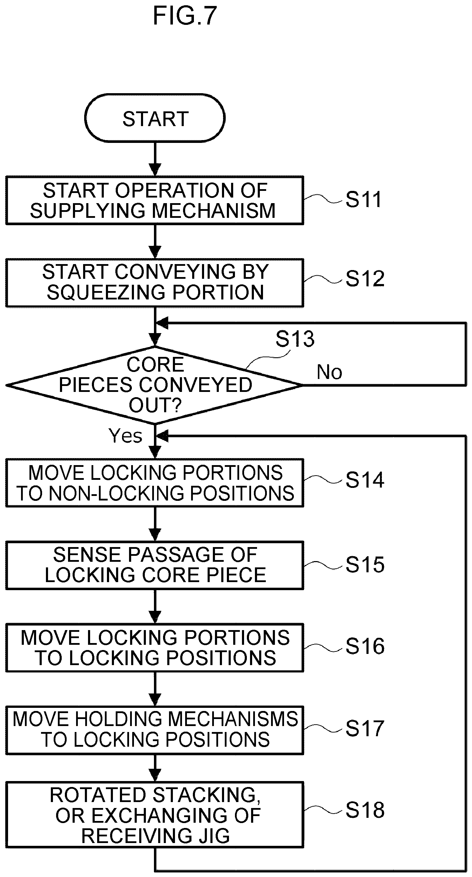

Fig. 7 is a flowchart illustrating an example of a laminated body manufacturing method relating to the first embodiment of the present disclosure. Further, Fig. 8 is a drawing for explaining operation, which illustrates states of the manufacturing device 1 at the time of executing the laminated body manufacturing method illustrated in Fig. 7. Note that, in Fig. 8, in order to make the conveyed states of the respective core pieces that are conveyed from the squeezing portion 60 to the receiving jig 40 easy to understand, only portions of the manufacturing device 1 that are related to the conveying are illustrated, and illustration of the other portions is omitted.

The laminated body manufacturing method described hereinafter exemplifies a method that carries out rotated stacking each time that a predetermined number of the core pieces are layered. Here, rotated stacking is layering while rotating the orientation of the electromagnetic steel plates at the time of stacking the respective core pieces. By carrying out this rotated stacking, magnetic directionality remaining at the stator core that includes the laminated body can be suppressed. Further, a deterioration in the perpendicularity or the parallelism of the stator core due to the imbalance toward one side of the plate thicknesses at the respective core pieces can be suppressed.

This rotated stacking can be carried out by rotating the receiving jig 40, which is holding a predetermined number of core pieces, by a predetermined angle around the rotation axis AR, which runs along the conveying direction (e.g., in the arrow A5 direction). The present embodiment exemplifies a method in which rotated stacking is carried out by rotating the receiving jig 40 a predetermined angle (e.g., 90° or 180°) each time that four of the core pieces are loaded on the pedestal 41, by using the conveying arm 43. Hereinafter, the four core pieces that are stacked during the time that rotated stacking or exchanging of the receiving jig 40 is carried out are collectively called core piece group G (see Fig. 8A), and this core piece group G structures the above-described block core. Note that, for ease of understanding, the present embodiment exemplifies a case in which the total number of core pieces that structure the laminated body is extremely small, and exemplifies a case in which the timing of carrying out the rotated stacking is each time that four of the core pieces are loaded. However, in cases in which the number of core pieces that structure the laminated body is greater than that exemplified here, or the like, the rotated stacking may be carried out, for example, each time that around several tens of core pieces are loaded.

The laminated body manufacturing method relating to the present embodiment includes at least a step (refer to step S11 that is described later) of supplying plural core pieces from the supplying mechanism 30, a step (refer to step S16 that is described later) of, by using the isolating mechanism 50, selectively supporting core pieces supplied from the supplying mechanism 30, a step (refer to step S14 that is described later) of moving the locking portions 51 of the isolating mechanism 50 from the locking positions P1 to the non-locking positions P2 in order to supply, to the receiving jig 40, the plural core pieces supported by the isolating mechanism 50, and a step (refer to step S16 that is described later) of returning the locking portions 51, which have been moved to the non-locking positions P2, to the locking positions P1 during the time period in which the non-locking core pieces 20 pass the position that includes the locking positions P1 on the conveying path of the core pieces.

To describe the laminated body manufacturing method relating to the present embodiment in further detail, first, the manufacturing method starts the operation of punching the locking core pieces 10 and the non-locking core pieces 20 by the supplying mechanism 30 (step S11). This punching operation can be carried out by lowering the punch 32 at a predetermined timing with respect to the strip-shaped steel plate 2 that is conveyed in one direction, e.g., the left-right direction. The punched-out locking core pieces 10 and non-locking core pieces 20 are moved to the lower side of the die 31 by being pushed by the punch 32, and are pushed-into the squeezing portion 60 from the upper end portion of the squeezing portion 60 that is connected to the die 31. At least portions of the outer peripheral surfaces of the locking core pieces 10 and the non-locking core pieces 20 that have been pushed into the squeezing portion 60 are supported from the sides by the inner peripheral surface 61 of the squeezing portion 60.

In the present embodiment, as described above, rotated stacking is carried out each time that the core piece group G that is formed from four core pieces is layered. In relation thereto, at the core pieces that were punched-out in above-described step S11, among the plural (four in Fig. 8) core pieces that structure this one core piece group G, it is good for the one or plural core pieces that are positioned at the downstream side to be the locking core pieces 10, and the one or plural core pieces that are positioned at the upstream side to be the non-locking core pieces 20. In other words, among the plural core pieces that structure the one core piece group G, it is good for at least the core piece that is first punched out to be the locking core piece 10, and for the others to be the non-locking core pieces 20. This is because, at the time of carrying out rotated stacking or exchanging of the receiving jig 40, in order to temporarily stop the supplying of the respective core pieces to the receiving jig 40 by the isolating mechanism 50, the core piece that is positioned the furthest downstream in the core piece group G must be supported. Note that, in the present embodiment, by alternately punching two of each of the locking core pieces 10 and the non-locking core pieces 20, the one core piece group G is exemplified as a group in which two of the locking core pieces 10 and two of the non-locking core pieces 20 are successively layered from the downstream side.

When the operation of punching the core pieces by the supplying mechanism 30 is started, the conveying of the respective core pieces by the squeezing portion 60 is started (step S12). The conveying of the core pieces by the squeezing portion 60 is carried out by, due to a new core piece being conveyed into the upper end portion of the squeezing portion 60 from the supplying mechanism 30, the other core pieces, which were previously supplied from the supplying mechanism 30 and are held within the squeezing portion 60, being pushed downward. Accordingly, the respective core pieces that are held within the squeezing portion 60 are conveyed along the conveying direction while the layered state thereof is maintained.

When a predetermined time elapses after the start of the conveying of the respective core pieces by the squeezing portion 60, the core pieces are successively conveyed out from the lower end portion of the squeezing portion 60 toward the receiving jig 40. When this conveying-out of the core pieces is started (Yes in step S13), as illustrated in Fig. 8A, the actuator 52 of the isolating mechanism 50 is operated, and the locking portions 51 are moved to the non-locking positions P2 (step S14). Note that the present embodiment exemplifies a case in which the locking portions 51 are at the locking positions P1 in the initial state of the manufacturing device 1, but it suffices to skip above-described step S14 in a case in which the locking portions 51 are at the non-locking positions P2 in this initial state.

Due to the locking portions 51 moving to the non-locking positions P2, the locking portions 51 do not exist on the conveying path of the core pieces. Therefore, at least the respective core pieces that structure the one core piece group G and that are conveyed-out from the squeezing portion 60 successively move downward and are layered on the pedestal 41 of the receiving jig 40. It is good for this movement to be monitored by the sensor 53. Specifically, the sensor 53 is disposed so as to face a vertical direction position (hereinafter, this position is called the "core piece supporting position") that includes the locking positions P1 at which the locking portions 51 of the isolating mechanism 50 lock the locking pieces 13 of the locking core piece 10. The sensor 53 can sense that the locking core piece 10 has passed this core piece supporting position.

When the passage of the locking core piece 10 of the core piece group G is sensed by the above-described sensor 53 or the like (step S15), as illustrated in Fig. 8B, the actuator 52 of the isolating mechanism 50 is operated, and movement of the locking portions 51 to the locking positions P1 is started (step S16). Here, the passage of the locking core piece 10 past the core piece supporting position means the passage of the locking core piece 10, which is positioned furthest upstream within the one core piece group G (in Fig. 8B, the locking core piece that is second from the bottom), past the core piece supporting position. Note that the method of detecting the passage of the locking core piece 10 past the core piece supporting position is not limited to that described above. This detection may alternatively be carried out, for example, by sensing that the core pieces which successively pass the core piece supporting position have switched from the locking core piece 10 to the non-locking core piece 20, or on the basis of the timing of the passage of the locking core piece 10 past the core piece supporting position that is specified by calculation taking into account the number of core pieces that are supplied from the supplying mechanism 30 or the supplying time or the like, without using a sensor. The detection accuracy of such alternative detection methods is low as compared with the above-described case of directly detecting the passage of the locking core piece 10 by the sensor 53. However, in the laminated body manufacturing method relating to the present embodiment, an above-described, alternative detection method can also be employed in order to ensure that the time period for the isolating mechanism 50 to move from the non-locking position P2 to the locking position P1 is long as will be described later.

It suffices for the moving of the locking portions 51 to the locking positions P1 in step S16 to be completed during the time period from after the locking core piece 10, which is positioned the furthest upstream within the one core piece group G, passes the core piece supporting position until the locking core piece 10, which is positioned the furthest downstream in another core piece group G that is conveyed next after the one core piece group G, reaches the core piece supporting position. As illustrated in Fig. 8B, this time period includes the time period in which the two non-locking core pieces 20 pass the core piece supporting position. However, the non-locking core pieces 20 do not have the locking pieces 13, and the locking positions P1 of the locking portions 51 are set on the paths of movement of the locking pieces 13. Therefore, even if the locking portions 51 were at the locking positions P1 at the time when the non-locking core pieces 20 pass the core piece supporting position, the locking portions 51 would not hinder the conveying of the non-locking core pieces 20.

When movement of the locking portions 51 to the locking positions P1 is completed, next, the moving of the holding mechanisms 55 to the locking positions P3 is started (step S17). The timing of the moving of the holding mechanisms 55 to the locking positions P3 can be set to be immediately after the locking core piece 10 is locked by the locking portions 51, or to be after the plural locking core pieces 10 (depending on the case, the plural locking core pieces 10 and non-locking core pieces 20) are supported by the locking portions 51.

Further, when the movement of the locking portions 51 to the locking positions P1 is completed, the respective core pieces that are conveyed out from the lower end portion of the squeezing portion 60 are supported by the isolating mechanism 50, and the conveying thereof is impeded temporarily. During this time period, the conveying arm 43 is operated, the pedestal 41 on which the one core piece group G is loaded is rotated a predetermined angle (e.g., 90°) around the rotation axis AR, and rotated stacking is carried out (step S18). It suffices for the timing of the execution of the rotated stacking to be during the time period in which the core pieces are being supported by the isolating mechanism 50. Accordingly, for example, the rotated stacking can also be executed before movement of the above-described holding mechanisms 55 to the locking positions P3 starts, or simultaneously with the start of this movement. Note that, in a case in which the number of core pieces that are stacked on the pedestal 41 reaches the desired number, exchanging of the receiving jig 40 is carried out instead of the above-described rotated stacking in this step S18. Further, the present embodiment exemplifies a case in which the rotated stacking or the exchanging of the receiving jig 40 is carried out in step S18 each time that the one core piece group G is loaded on the pedestal 41, but the processing shown in step S18 does not necessarily have to be carried out each time that one core piece group G is loaded. For example, it may be made such that the rotated stacking and the exchanging of the receiving jig 40 is not carried out until a predetermined number of core piece groups G are loaded on the pedestal 41. In this case, it is good to skip step S18 as needed.

In step S18, when the rotated stacking operation is completed or the exchanging of the receiving jig 40 is completed, the flowchart returns to step S14, and conveying of the next core piece group G is re-started. Specifically, by moving the locking portions 51 from the locking positions P1 to the non-locking positions P2, the core pieces, which are being supported by the isolating mechanism 50 and for which conveying was temporarily impeded in step S16, are conveyed to the receiving jig 40. Note that the moving of the holding mechanisms 55 to the non-locking positions P4 also is executed together with the moving of the locking portions 51 to the non-locking positions P2.

As described above, in accordance with the laminated body manufacturing method relating to the present embodiment, by controlling the supplying of core pieces by causing the locking portions 51 of the isolating mechanism 50 to contact the locking pieces 13 of the locking core piece 10, it can be made such that the time for moving the locking portions 51 of the isolating mechanism 50 can be ensured to be long as compared with conventionally. Due thereto, there is no need to use elements having a fast response speed as the structural elements and the like of the isolating mechanism 50. Further, the respective locking portions 51 can be reliably moved all the way to the locking positions P1, and the locking of the locking portions 51 and the locking pieces 13 can be executed stably.

The above-described embodiment exemplifies a case in which, in the one core piece group G, the two core pieces at the downstream side are made to be the locking core pieces 10, and the two at the upstream side are made to be the non-locking core pieces 20. However, only the one core piece at the downstream side may be made to be the locking core piece 10, and the remaining three may be made to be the non-locking core pieces 20. If the number of the non-locking core pieces 20 that structure the core piece group G is made to be larger in this way, the time for moving the isolating mechanism 50 can be ensured to be even longer.

On the other hand, as exemplified in the above-described embodiment, if the number of the locking core pieces 10 that are included in the one core piece group G is made to be two or more, the strength of the locking pieces 13 can be improved. Namely, for example, if the number of the locking core pieces 10 included in the one core piece group G is made to be two, on the upstream sides of the locking pieces 13 of the locking core piece 10 that is positioned furthest downstream in the one core piece group G, there are layered the locking pieces 13 of the second locking core piece 10 that is layered on that locking core piece 10. Accordingly, the weight of the two locking core pieces 10 and the non-locking core pieces 20 layered on these two locking core pieces 10 can be supported by the locking pieces 13 of these two, and deformation of the locking pieces 13 can be suppressed. On the basis of the above-described point, it is good for the number of the locking core pieces 10 that are included in the one core piece group G to be adjusted appropriately in consideration of the number of and the weight of the core pieces included in the core piece group G.

Further, the above-described embodiment exemplifies a case in which the step of moving the holding mechanisms 55 to the locking positions (step S17) is included. However, instead of this step, a step of improving the force of supporting the respective core pieces by the locking portions 51 can also be employed. Specifically, a step can be employed in which the locking portions 51 are moved to positions (corresponding to holding positions) where they lock not only the locking pieces 13 but also at least a portion of the outer peripheral edge of the locking core piece 10. In a case in which the locking portions 51 are structures that operate in the directions shown by arrows A3 in Fig. 4, if positions, at which the locking portions 51 are moved further in the direction of approaching the central portion of the locking core piece 10 than the locking positions P1, are made to be the holding positions, the force of supporting the core pieces by the locking portions 51 can be improved even without using the above-described holding mechanisms 55, and stable support of the respective core pieces can be realized.

Moreover, the laminated body that is manufactured through the above-described series of processes is a structure on which welding of the respective core pieces or winding of coils into the slots or the like is to be carried out, and the locking pieces 13 can be repurposed by being used as the welding material at the time when the respective core pieces are welded. Namely, the laminated body manufacturing method relating to the present embodiment can further include a step of structuring the locking pieces 13 by projections that project out from the outer peripheral surface of the locking core piece 10, and welding the respective core pieces by using the locking pieces 13, which are structured by these projections, as projections for welding. Due thereto, by using the locking pieces 13 as the welding material, there is no need to provide the locking pieces and the projections for welding separately.

### <Second Embodiment>

The above-described first embodiment exemplifies a case in which the supplying of the respective core pieces to the receiving jig 40 is controlled by using the isolating mechanism 50, but the present disclosure is not limited to this structure. Thus, a laminated body manufacturing device and a laminated body manufacturing method that do not use the isolating mechanism 50 are described hereinafter as a second embodiment of the present disclosure.

### (Laminated Body Manufacturing Device)

Manufacturing device 1A relating to the present embodiment may include structures similar to those of the manufacturing device 1 relating to the first embodiment, except for the point that the manufacturing device 1A does not have members such as the isolating mechanism 50 and the like, and the structure of the squeezing portion is different. Accordingly, portions formed from structures that are similar to those of the manufacturing device 1 relating to the first embodiment are denoted by the same reference numerals that were used in the description of the first embodiment, and description thereof is omitted, and explanation centers on the structures that differ from the manufacturing device 1 relating to the first embodiment.

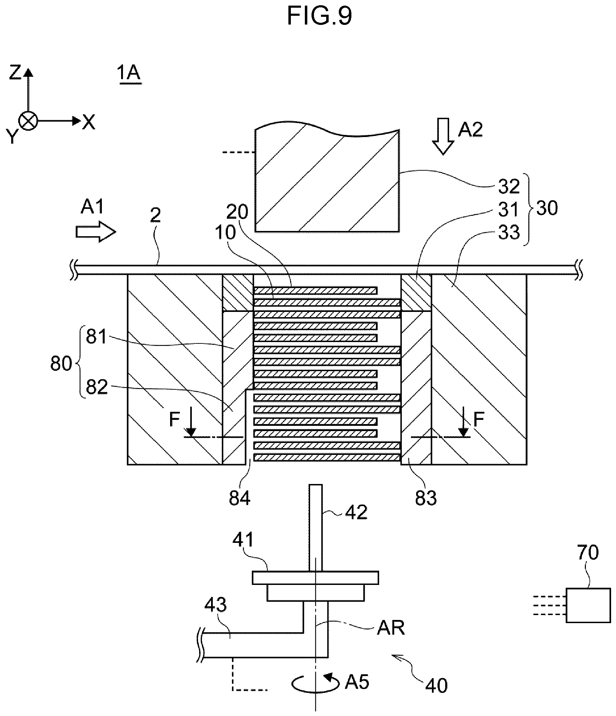

Fig. 9 is a schematic explanatory drawing illustrating an example of the laminated body manufacturing device relating to the second embodiment of the present disclosure. This Fig. 9 is drawn so as to correspond to Fig. 3. As illustrated in Fig. 9, the laminated body manufacturing device 1A relating to the present embodiment includes, for example, a second squeezing portion 80 that can downwardly convey the locking core pieces 10 and the non-locking core pieces 20 illustrated in Fig. 1 and Fig. 2, the supplying mechanism 30 that is positioned above the second squeezing portion 80 and can selectively supply the respective core pieces to the second squeezing portion 80, and the receiving jig 40 that can be positioned beneath the second squeezing portion 80 and can receive a plurality of the core pieces that are conveyed out from the second squeezing portion 80. Note that, in the same way as the laminated body manufacturing device 1 relating to the first embodiment, the shapes of the core pieces that are layered by the laminated body manufacturing device 1A relating to the present embodiment are not limited to those illustrated in Fig. 1 and Fig. 2. For example, core pieces at which the shapes of the outer peripheral surfaces thereof are such as those exemplified in Fig. 6 can also be layered.

The second squeezing portion 80 supports, from the sides, the locking pieces 13 of the locking core pieces 10 that pass through the interior of the second squeezing portion 80. Specifically, the second squeezing portion 80 can be structured by a substantially cylindrical tube-shaped member that conveys, to the receiving jig 40, the locking core pieces 10 and the non-locking core pieces 20 that have been punch-molded by the supplying mechanism 30 that includes the die 31 and the punch 32 and that have been pushed-out toward the lower side of the die 31. In addition, the second squeezing portion 80 can be structured by a squeezing portion upstream portion 81 that supports, from the sides, both the locking core pieces 10 and the non-locking core pieces 20 that pass through the interior of the second squeezing portion 80, and a squeezing portion downstream portion 82 that is positioned at the conveying direction downstream side of the core pieces and that supports, from the sides, the locking pieces 13 of the locking core pieces 10 that pass through the interior of the second squeezing portion 80. Note that the second squeezing portion 80 relating to the present embodiment is exemplified as a structure that includes the squeezing portion upstream portion 81 and the squeezing portion downstream portion 82 as described above, but is not limited to such a structure. Specifically, the second squeezing portion 80 may be a structure that does not have the above-described squeezing portion upstream portion 81.

The squeezing portion upstream portion 81 may have a structure that is similar to the squeezing portion 60 of the first embodiment. Namely, the inner peripheral surface thereof may have the same shape as the inner peripheral surface 61 of the squeezing portion 60 illustrated in Fig. 5.

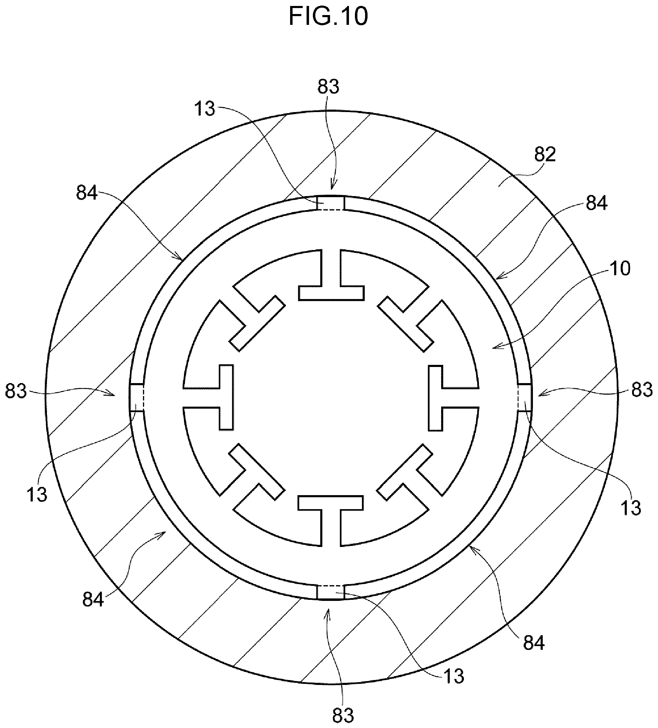

Fig. 10 is a schematic sectional view cut at line F-F of Fig. 9. As illustrated in Fig. 10, at the squeezing portion downstream portion 82, first locking portions 83, which abut the locking pieces 13 from the sides and support the locking core piece 10, may be provided at positions of the inner peripheral surface which positions face the locking pieces 13 of the locking core piece 10. Here, at the squeezing portion downstream portion 82, the fact that, other than at the portions of the inner peripheral surface where the first locking portions 83 are formed, neither the locking core piece 10 nor the non-locking core piece 20 are supported is a particularly important fact to note. In the laminated body manufacturing device 1A relating to the present embodiment, gaps 84 are formed between the outer peripheral surfaces of the respective core pieces and the inner peripheral surface of the squeezing portion downstream portion 82 other than at the portions where the first locking portions 83 are formed. Note that it suffices for the shape of the inner peripheral surface of the squeezing portion downstream portion 82 to be changed appropriately so as to match the shapes of the locking core pieces 10 and the non-locking core pieces 20 that are conveyed.

Due to the laminated body manufacturing device 1A relating to the present embodiment including the above-described second squeezing portion 80, at the squeezing portion downstream portion 82, only the locking core pieces 10 are conveyed in supported states, and the sides of the non-locking core pieces 20 are not supported by the second squeezing portion 80, and the non-locking core pieces 20 are conveyed on the conveying path in a state of being loaded on and supported by the top surface of the locking core piece 10 that is positioned at the downstream side thereof. Further, the non-locking core pieces 20 that are conveyed out from the lower end portion of the second squeezing portion 80 are conveyed out simultaneously with the time that the locking core pieces 10 positioned at the downstream side thereof are conveyed out. If the conveying out of the non-locking core pieces 20 is carried out simultaneously with the conveying out of the locking core pieces 10 in this way, the time period from after the non-locking core pieces 20 are conveyed out until the locking core piece 10 is conveyed out next from the lower end portion of the second squeezing portion 80 is long. Accordingly, rotated stacking or exchanging of the receiving jig 40 can be carried out at this time, and layering of the core pieces can be executed continuously and accurately without using special structural elements for stopping the device or for controlling the timing of the supply of the core pieces in order to carry out rotated stacking or exchanging of the receiving jig 40.

### (Laminated Body Manufacturing Method)

A laminated body manufacturing method relating to the present embodiment is described next. The following description exemplifies a case in which a laminated body is manufactured by using the above-described laminated body manufacturing device 1A, but the laminated body manufacturing method of the present disclosure can be implemented even by a device other than the manufacturing device 1A. Note that explanation of the effects and the like that is given hereinafter also serves as explanation of the effects of the manufacturing device 1A relating to the present embodiment.

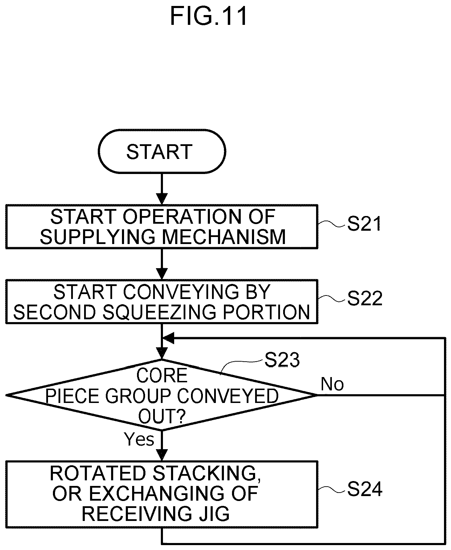

Fig. 11 is a flowchart illustrating an example of the laminated body manufacturing method relating to the second embodiment of the present disclosure. Further, Fig. 12 is a drawing for explaining operation, which illustrates the states of main portions of the manufacturing device 1A at the time of executing the laminated body manufacturing method illustrated in Fig. 11. Note that, in Fig. 12, in order to make the conveyed states of the respective core pieces that are conveyed from the second squeezing portion 80 to the receiving jig 40 easy to understand, only portions of the manufacturing device 1A that are related to the conveying are illustrated, and illustration of the other portions is omitted. Further, in the same way as the laminated body manufacturing method relating to the first embodiment, the laminated body manufacturing method described hereinafter exemplifies a case in which rotated stacking is carried out each time a predetermined number of core pieces are layered.

The laminated body manufacturing method relating to the present embodiment includes at least a step of supplying plural core pieces to the second squeezing portion 80 (refer to step S21 that is described later), and a step of receiving, at the receiving jig 40, the locking core pieces 10 that have passed through the squeezing portion downstream portion 82, or the locking core pieces 10 that have passed through the squeezing portion downstream portion 82 and the one or plural non-locking core pieces 20 that are supported on the top surface thereof.

To describe the laminated body manufacturing method relating to the present embodiment in further detail, first, the manufacturing method starts the punching operation of the locking core pieces 10 and the non-locking core pieces 20 by the supplying mechanism 30 (step S21). The punched-out locking core pieces 10 and non-locking core pieces 20 are moved to the lower side of the die 31 by being pushed by the punch 32, and are pushed-into the second squeezing portion 80 from the upper end portion of the second squeezing portion 80 that is connected to the die 31. At least portions of the outer peripheral surfaces of the locking core pieces 10 and non-locking core pieces 20 that have been pushed into the second squeezing portion 80 are supported from the sides by the inner peripheral surface of the squeezing portion upstream portion 81.

In the present embodiment as well, in the same way as in the first embodiment, rotated stacking is carried out each time that the core piece group G that is formed from four core pieces is layered. Accordingly, above-described step S21 exemplifies a case in which two of each of the locking core pieces 10 and the non-locking core pieces 20 are alternately punched, and two of the locking core pieces 10 and two of the non-locking core pieces 20 are layered from the downstream side at the one core piece group G.

When the operation of punching the core pieces by the supplying mechanism 30 is started, the conveying of the respective core pieces by the second squeezing portion 80 is started (step S22). In the conveying of the respective core pieces by the second squeezing portion 80, at the squeezing portion upstream portion 81, both the locking core pieces 10 and the non-locking core pieces 20 are conveyed along the conveying direction while the state in which the core pieces are layered with the sides thereof supported is maintained.

When the conveying of the respective core pieces within the second squeezing portion 80 proceeds and they arrive at the squeezing portion downstream portion 82, among the respective core pieces, at the locking core pieces 10, the support from the sides is maintained due to the locking pieces 13 contacting the locking portions 83. On the other hand, at the non-locking core pieces 20, support from the sides is cancelled, and the non-locking core pieces 20 are supported on the top surface of the locking core piece 10 that is positioned at the downstream side thereof (see Fig. 12A).

When the conveying of the respective core pieces by the second squeezing portion 80 proceeds further, first, among the respective core pieces that structure the one core piece group G, the locking core piece 10 that is positioned the furthest downstream is conveyed-out from the lower end portion of the second squeezing portion 80, and next, the locking core piece 10 (hereinafter this locking core piece 10 is, for the time being, called the "second locking core piece 10" for easy understanding of the explanation), which was being conveyed within the squeezing portion downstream portion 82 in a layered state in which the bottom surface thereof abutted the top surface of the locking core piece 10 positioned the furthest downstream, is conveyed out from the lower end portion of the second squeezing portion 80.

Here, the two non-locking core pieces 20 included in the same core piece group G are loaded on and supported by the top surface of the second locking core piece 10. Because the non-locking core pieces 20 are not supported by the squeezing portion downstream portion 82, at the time when the second locking core piece 10 is conveyed out from the lower end portion of the second squeezing portion 80, the two non-locking core pieces 20 as well are simultaneously conveyed out from the lower end portion of the second squeezing portion 80 as illustrated in Fig. 12B. At this time, the locking core piece 10, which was layered on the upstream side of the two non-locking core pieces 20, is conveyed to a position that is apart from the lower end portion of the second squeezing portion 80.

When the second locking core piece 10 and the two non-locking core pieces 20 supported on the top surface thereof are loaded on the pedestal 41 of the receiving jig 40 (Yes in step S23), as illustrated in Fig. 12C, the conveying arm 43 is operated, the pedestal 41 on which the one core piece group G is loaded is rotated a predetermined angle (e.g., 90°) around the rotation axis AR, and rotated stacking is carried out (step S24). When the execution of the rotated stacking, as described above, the locking core piece 10 that is to be conveyed to the receiving jig 40 next has been conveyed to a position that is apart from the lower end portion of the second squeezing portion 80, and a relatively long time period is ensured up until the locking core piece 10 is conveyed out from the lower end portion of the second squeezing portion 80. Accordingly, no new core piece is conveyed out from the second squeezing portion 80 during the execution of the rotated stacking. Note that, in this step S24, in a case in which the number of core pieces that are stacked on the pedestal 41 reaches the desired number, exchanging of the receiving jig 40 can be carried out instead of the above-described rotated stacking. Further, in step S24, when the rotated stacking operation is completed or the exchanging of the receiving jig 40 is completed, it suffices for the flowchart to return to step S23 and standby until the next core piece group G is conveyed out.

As described above, in accordance with the laminated body manufacturing method relating to the present embodiment, merely by devising a portion of the inner peripheral surface of the second squeezing portion 80, it is possible to adjust the conveying-out timing of the respective core pieces that are conveyed out from the lower end portion of the second squeezing portion 80. Accordingly, manufacturing of laminated bodies can be carried out continuously by a simple structure. Further, due to the squeezing portion downstream portion 82 being structured so as to support only the locking core pieces 10, each time that the core piece group G is conveyed out, the time period until the next conveying out is ensured to be long, and therefore, rotated stacking or exchanging of the receiving jig 40 can be executed reliably.

The present disclosure is not limited to the above-described embodiments, and can be implemented by being modified in various ways within a scope that does not depart from the gist of the present disclosure. Further, such modifications are all included in the technical concept of the present disclosure.

All publications including periodicals, patent applications and patents that are cited in the present specification are incorporated by reference herein to the same extent as if each publication were to be individually and specifically incorporated by reference and all of the contents thereof were to be described herein.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Preferred embodiments of this disclosure are described herein, including the best mode known to the inventors for carrying out the disclosure. Variations of those preferred embodiments may become apparent to those of ordinary skill in the art upon reading the foregoing description. The inventors expect skilled artisans to employ such variations as appropriate, and the inventors intend for the disclosure to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

## Claims

1. A laminated body manufacturing device, comprising:
a supply mechanism configured to supply a plurality of plate-shaped core pieces including locking core pieces, which have locking pieces at a plurality of positions at outer peripheral surfaces thereof, and non-locking core pieces that do not have the locking pieces;
a receiving member configured to receive a plurality of the core pieces supplied from the supply mechanism; and
an isolation mechanism disposed between the supply mechanism and the receiving member in a conveying direction of the core pieces, and controlling supply of the core pieces to the receiving member,
wherein the isolation mechanism has locking portions that can move between locking positions, at which the locking portions respectively lock the plurality of locking pieces of the locking core pieces supplied from the supply mechanism, and non-locking positions at which the locking portions do not lock the respective locking pieces, and has an operating device moving the locking portions to the locking positions and the non-locking positions.

2. The laminated body manufacturing device of Claim 1, further comprising a squeezing portion disposed between the supply mechanism and the isolation mechanism in the conveying direction and supporting, from sides, the core pieces supplied from the supply mechanism, wherein the core pieces that are supported from the sides by the squeezing portion can be conveyed within the squeezing portion along the conveying direction.

3. The laminated body manufacturing device of Claim 1 or Claim 2, wherein:
a plurality of the core pieces are layered and structure a block core, and
one block core structures a motor core, or a plurality of the block cores are layered and structure a motor core, and the block core is structured by one or a plurality of locking core pieces positioned at a downstream side in the conveying direction and one or a plurality of the non-locking core pieces positioned at an upstream side in the conveying direction.

4. The laminated body manufacturing device of Claim 3, wherein, after the operating device moves the locking portions from the locking positions to the non-locking positions, the operating device returns the locking portions to the locking positions during a time period in which the non-locking core pieces pass a position on a conveying path of the core pieces that includes the locking positions.

5. The laminated body manufacturing device of any one of Claim 1 through Claim 4, wherein the locking pieces are structured by projections that project outward from outer peripheral surfaces of the locking core pieces.

6. The laminated body manufacturing device of any one of Claim 1 through Claim 4, wherein the locking pieces are structured by portions of outer peripheral edges of the locking core pieces, and, at the non-locking core pieces, concave portions that open toward outer peripheral surfaces of the non-locking core pieces are provided at positions corresponding to the locking pieces in a state in which the non-locking core pieces are layered with the locking core pieces.

7. The laminated body manufacturing device of any one of Claim 1 through Claim 6, wherein the operating device operates the locking portions to move between the locking positions, which are provided in a direction of relatively approaching the locking core pieces, and the non-locking positions, which are provided in a direction of relatively moving away from the locking core pieces.

8. The laminated body manufacturing device of any one of Claim 1 through Claim 6, wherein the operating device operates the locking portions to move between the locking positions, which are provided on movement paths of the locking pieces when the locking core pieces are conveyed, and the non-locking positions, which are provided at positions adjacent, in directions running along outer peripheral surfaces of the locking core pieces, to the movement paths of the locking pieces.

9. The laminated body manufacturing device of any one of Claim 1 through Claim 8, further comprising holding mechanisms holding the locking core pieces at which the locking pieces are locked by the locking portions.

10. The laminated body manufacturing device of any one of Claim 1 through Claim 9, further comprising a rotating mechanism rotating the receiving member around a rotation axis, the rotation axis being oriented along the conveying direction.

11. The laminated body manufacturing device of any one of Claim 1 through Claim 10, wherein:
a plurality of the core pieces are layered and structure a block core, and
one block core structures a stator core, or a plurality of the block cores are layered and structure a stator core, and
the core pieces have annular yokes, and teeth provided at inner peripheries of the yokes, and the locking pieces are positioned at radial direction outer sides of the teeth.

12. A laminated body manufacturing device, comprising:
a squeezing portion configured to downwardly convey a plurality of plate-shaped core pieces including locking core pieces, which have locking pieces at a plurality of positions at outer peripheral surfaces thereof, and non-locking core pieces that do not have the locking pieces;
a supply mechanism that is positioned at an upstream side, in a conveying direction of the core pieces, of the squeezing portion and is configured to selectively supply the locking core pieces and the non-locking core pieces to the squeezing portion; and
a receiving member configured to receive a plurality of the core pieces supplied from the conveying direction downstream side of the squeezing portion,
wherein the squeezing portion supports, from sides, the locking pieces of the locking core pieces that pass through an interior of the squeezing portion.

13. The laminated body manufacturing device of Claim 12, wherein the squeezing portion has a squeezing portion upstream portion positioned at the conveying direction upstream side of the squeezing portion and supporting, from the sides, a plurality of the locking core pieces and the non-locking core pieces that pass through the interior of the squeezing portion, and a squeezing portion downstream portion positioned at the conveying direction downstream side of the squeezing portion and supporting, from the sides, the locking pieces of the locking core pieces that pass through the interior of the squeezing portion.

14. A laminated body manufacturing method, comprising:
a step of supplying a plurality of plate-shaped core pieces from a supply mechanism, the plurality of plate-shaped core pieces including locking core pieces, which have locking pieces at a plurality of positions at outer peripheral surfaces thereof, and non-locking core pieces that do not have the locking pieces;
a step of selectively supporting the core pieces supplied from the supply mechanism by using an isolation mechanism, the isolation mechanism having locking portions configured to move between locking positions, at which the locking portions respectively lock the plurality of locking pieces of the locking core pieces supplied from the supply mechanism, and non-locking positions at which the locking portions do not lock the respective locking pieces, and having an operating device moving the locking portions to the locking positions and the non-locking positions, wherein the core pieces are supported by the locking portions that are positioned at the locking positions locking the locking pieces of the locking core pieces;
a step of moving the locking portions from the locking positions to the non-locking positions in order to supply a plurality of the core pieces, which are supported by the isolation mechanism, to the receiving member; and
a step of returning the locking portions, which have been moved to the non-locking positions, to the locking positions during a time period in which the non-locking core pieces pass a position that includes the locking positions on a conveying path of the core pieces.

15. The laminated body manufacturing method of Claim 14, further comprising a step of supporting the core pieces, which have been supplied from the supply mechanism, from sides using a squeezing portion, the squeezing portion being disposed between the supply mechanism and the isolation mechanism in a conveying direction of the core pieces and being configured to convey the core pieces, which are supported by the squeezing portion from the sides, at an interior of the squeezing portion along the conveying direction.

16. The laminated body manufacturing method of Claim 14 or Claim 15, further comprising a step of, by using holding mechanisms, holding the locking core pieces at which the locking pieces are locked by the locking portions.

17. The laminated body manufacturing method of Claim 14 or Claim 15, further comprising a step of moving the locking portions to holding positions at which the locking portions lock the locking pieces and at least portions of outer peripheral edges of the locking core pieces supplied from the supply mechanism.

18. The laminated body manufacturing method of any one of Claim 15 through Claim 17, further comprising a step of rotating the receiving member by a predetermined angle around a rotation axis, the rotation axis being oriented along the conveying direction.

19. The laminated body manufacturing method of any one of Claim 14 through Claim 18, wherein:
a plurality of the core pieces are layered and structure a block core, and
one block core structures a motor core, or a plurality of the block cores are layered and structure a motor core, and the block core is structured by one or a plurality of locking core pieces positioned at a downstream side in a conveying direction of the core pieces and one or a plurality of the non-locking core pieces positioned at an upstream side in the conveying direction.

20. The laminated body manufacturing method of any one of Claim 14 through Claim 19, wherein the locking pieces are structured by projections that project outward from outer peripheral surfaces of the locking core pieces, and the method further comprises a step of welding by using the locking pieces as projections for welding.

21. A laminated body manufacturing method, comprising:
a step of supplying a plurality of plate-shaped core pieces to a squeezing portion, the plurality of core pieces including locking core pieces, which have locking pieces at a plurality of positions at outer peripheral surfaces thereof, and non-locking core pieces that do not have the locking pieces, and the squeezing portion supporting, from sides, the locking pieces of the locking core pieces that pass through an interior of the squeezing portion; and
a step of receiving, by a receiving member, a locking core piece that passes through the squeezing portion, or a locking core piece that passes through the squeezing portion and one or a plurality of non-locking core pieces supported by a top surface of the locking core piece.
